# EUROPEAN PATENT APPLICATION

(11) **EP 0 654 315 A1**
(43) Date of publication of application: **24.05.1995**
(21) Application number: 93118637.3
(22) Date of filing: 19.11.1993
(51) Int. Cl.: B23B 3/26, B23Q 35/10

(54) **Differential cam mechanism for control of revolving tools**

(71) Applicant: Varghese, Wilson, Borivli (W), Bombay 400 103 (IN)
(72) Inventor: Varghese, Wilson, Borivli (W), Bombay 400 103 (IN)
(74) Representative: Irons, Mark David

(57) **Abstract**

A differential cam mechanism for control of revolving tools (fig. 1& 2) comprises an outer pipe (2) rotatably mounted in a static housing (7), an inner pipe (1) rotatably and co-axially mounted inside the said outer pipe (2), a slot (10) and a cam (12) provided on the flanges (3) and (4) located at one end of the said co-axial pipes, a cam follower/tool holder (11) having one of it's ends slidably engaged in the said slot (10) and the other end slidably engaged with the cam (12), a tool (15) fixed at one end of the cam follower/tool holder (11), the free ends of the said pipes (1,2) provided with drive means (16,17) for rotating the said pipes independent of each other at desired variable speeds in both directions.

## Description

The invention relates to control of tool movement in machining operations.

More specifically this invention relates to a differential cam mechanism which in machining operations facilitates controlled uniform movement to a tool revolving around a stationary job.

Usually in many machining operations like turning or cutting operation, the job rotates and the tool is stationary. In circumstances where it is difficult to rotate the job the tool is made to revolve around the job and the job is kept stationary.

Whenever the job is stationary and the tool is made to revolve around the job the revolving tool needs to be imparted controlled radial movement/feed to engage the job and carry out the machining operation.

One of the existing practices for imparting controlled radial feed to a revolving tool is by using a cam and follower arrangement. In this arrangement a cam is statically mounted on the machine frame, adjacent to the periphery of the path of the revolving tool and the cam follower imparting radial movement to the tool is mounted beside the tool and revolves around the job along with the tool. The main disadvantage of this arrangement is that for each revolution of the tool around the job, the cam follower engages the cam only once and the radial feed to the tool is achieved only once for each revolution, in a single step thereby giving jerk to the tool, causing tool breakage, and/or instant overloading of the machine drive.

Another known method for imparting controlled radial feed to the revolving tool is by using a gear arrangement, in which a gear wheel which imparts radial movement to the tool and rotates with the tool, is continuously engaged to another static gear-ring located in the path of the said gear wheel. Though this arrangement imparts a uniform radial feed, the main disadvantage of this arrangement is that the withdrawal of the tool requires a reverse run of the gear arrangement. Moreover the radial movement of the tool cannot be stopped wihout stopping it's revolution around the job, thereby preventing any horizontal or axial machining operation to be carried out on the job simultaneously.

Some other known methods for imparting controlled radial feed to a revolving tool are by mounting electrical/electromagnetic, pneumatic or hydraulic tool drives on the revolving tool holders. The main drawback of these systems is that the power feed and the control line to the revolving tool holder make the system highly complicated and difficult to maintain. Besides, these systems involve very high initial expenditure, running and maintanance cost.

The main object of this invention is to obviate the above mentioned disadvantages or drawbacks of the existing methods and to provide a differential cam mechanism which will impart to a revolving tool controlled, uniform movement perpendicular to it's axis of revolution around a job.

A further object of this invention is to provide a differential cam mechanism which will allow a very high precision in radial tool movement of a tool when the tool is revolving around a job.

A further object of this invention is to provide a differential cam mechanism which will allow speed variation, stoppage or reversal of radial tool movement without stopping the revolutionary motion of the tool or changing the direction of it's revolution.

A further object of this invention is to provide a differential cam mechanism which will allow selection of a wide range of mechanical advantage to suit any drive force limitations.

A further object of this invention is to provide a differential cam mechanism which will allow easy, controlled engagement and withdrawal of tool during motion itself.

A further object of this invention is to provide a differential cam mechanism which permits infinite combinations of speeds in radial and revolutionary movement of the tool.

A further object of this invention is to provide a differential cam mechanism which facilitates inter changeability in mounting the cam and cam follower/tool holder on inner or outer pipe/flange for permitting internal or external tool contact on the job.

A further object of this invention is to provide a differential cam mechanism which, does not impose limitations like in other known cam follower arrangements, where one cycle of movement of a follower corresponds to one engagement with the cam.

A further object of this invention is to provide a differential cam mechanism which can be provided with an axial movement in any known manner to perform any operation which a lathe machine is capable of.

A further object of this invention is to provide a differential cam mechanism which facilitates simultaneous multiple tool operations by allowing more than one cam follower to follow one or moe cams simultaneously.

The invention will now be described by way of example and with reference to the accompanying drawings wherein:
Fig. 1- Shows a part sectional elevation of the differential cam mechanism, according to an embodiment of this invention.
Fig. 2- Shows a side elevation of the differential cam mechanism, shown in fig. 1.
Fig. 3- Shows a part sectional elevation of the differential cam mechanism, according to another embodiment of this invention.
Fig s.4,5,6,7,8&9 show partial elevations of the differential cam mechanism according to further embodiments of this invention.
Fig s.10&11 show the side elevations of the differential cam mechanism according to further embodiments of this invention.

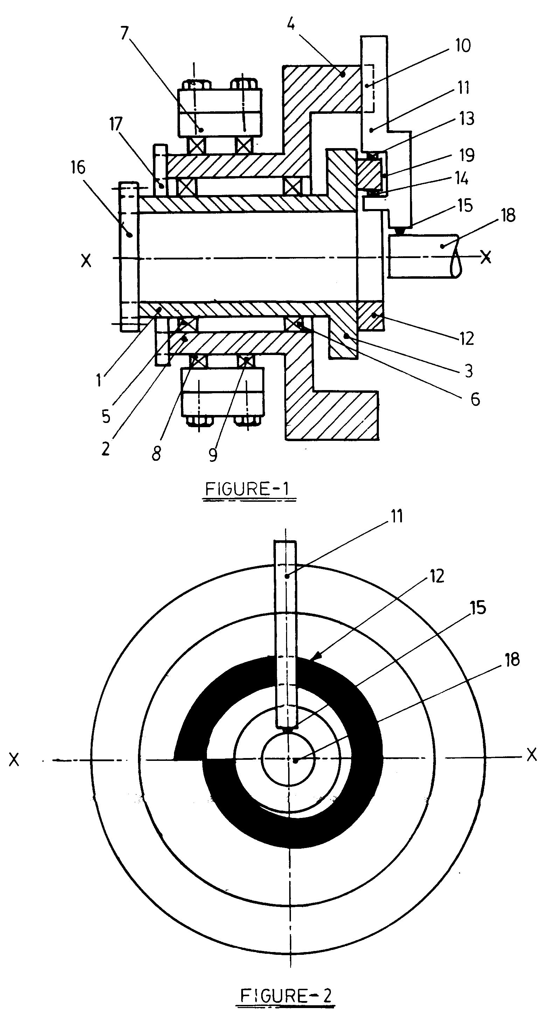

Referring to the figures 1&2, the differential cam mechanism for control of revolving tools according to an embodiment of this invention comprises an inner pipe (1) provided co-axially inside an outer pipe (2). The two pipes (1 & 2) are preferably of different lengths. One end of the inner pipe (1) is preferably provided with a flange (3) which preferably is a plane flange. One end of the outer pipe (2) is also preferably provided with a flange (4) which is preferably angular, covering flange (3).

Preferably one or more, bearings (5,6) are provided over the inner pipe (1) so that the inner pipe is rotatably mounted inside the outer pipe (2). The outer pipe (2) is also rotatably mounted in a static housing (7) with the help of preferably one or more, bearings (8,9). A slot (10) is provided at the front face of the pipe flange (4) for slidably engaging therein one end of a cam follower/tool holder (11). A cam (12) is provided at the front face of the inner pipe/flange (3). The cam (12) is having an involute/planar spiral profile so that the cam's radius from the axis of the inner pipe uniformly and continuously varies in the same plane as the cam describes a circle. The difference between the maximum radius and minimum radius of the cam (12) determines the maximum radial feed which can be imparted to the tool by this mechanism. The cam follower (11) in the portion facing the cam (12) is having a bracket or like means (19) for mounting bearings (13,14) so that the cam follower (11) freely slides over the cam (12) when it rotates along with the outer flange (4). At the end of the cam follower (11) a tool (15) is mounted. The free ends of the inner pipe (1) and the outer pipe (2) are provided with known drive means (16,17) respectively, for rotating the inner pipe (1) and the outer pipe (2) independently at desired variable speeds. The two pipes can be rotated by using single prime mover in a known manner or two seperate prime movers may also be used.

The working of the differential cam mechanism is simple. When the cam (12) is steady and the outer flange (4) rotates in clockwise direction the cam follower (11) which follows the diminishing radius of the cam (12) moves towards the common axis X-X of the two co-axial pipes (1,2) and engages the tool (15) fixed at the free end of the cam follower/tool holder (11) with the job (18) which is held co-axially with the common axis (X-X). When the outer flange (4) is steady and the cam (12) rotates in the same clockwise direction the cam follower (11) moves away from the axis (X-X) thereby disengaging the tool (15) from the job (18). When both the pipes (1,2) rotate at the same speed and in the same direction the cam follower (11) simply revolves around the job keeping the tool (15) at a constant distance from the axis (X-X). When both the pipes rotate at different speeds, the difference in their speed of rotation decides the speed and direction of radial movement/feed of the cam follower (11) and tool (15).

Thus by varying the speed of rotation of the two pipes (1 & 2) with the help of drive means (16 & 17) provided at the free ends of the pipes, ( 1 & 2) respectively it is possible to obtain a differential in speed which can control the uniform radial movement/feed of tool (15) in microns in both forward and backward directions.

It is clear from the above description that the differential cam mechanism of this invention when provided with known drive means for rotating the two co-axial pipes independently of each other at desired variable speeds allow very high precision in radial tool movement/feed in forward and backward directions, speed variation of tool movement, stoppage of tool movement and reversal of tool movement without stopping or changing the direction of revolution of the tool, thus allowing easy controlled, jerk free engagement and withdrawal of tool during motion itself and due to uniform and smooth radial feed being imparted to the tool, there is no overloading of the prime mover and breakage of tool. Besides quality of the job and tool life improve.

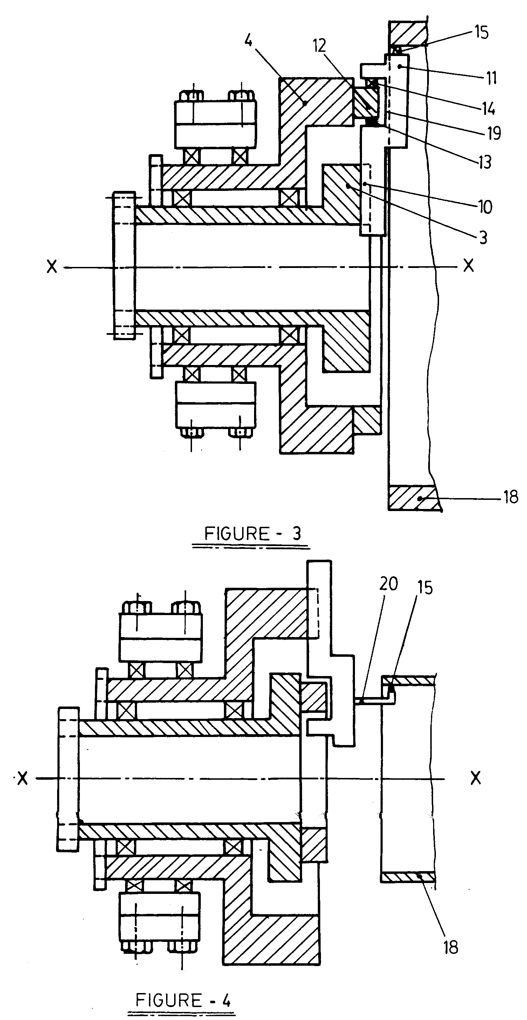

According to another embodiment of this invention as shown in fig.3, the inner flange (3) is provided with a slot (10) for slidingly engaging therein, one end of the cam follower (11) and the outer flange (4) is provided with the cam (12). This inter-changeability in mounting the cam and cam follower/tool holder helps in adapting the differential cam mechanism to specific internal or external machining operations.

According to a further embodiment of this invention shown in fig.4, an axially projecting arm (20) is provided on the cam follower (11) and the tool (15) is mounted at the end of the axial arm (20). This arrangement facilitates various internal or external machining operation on the job (18).

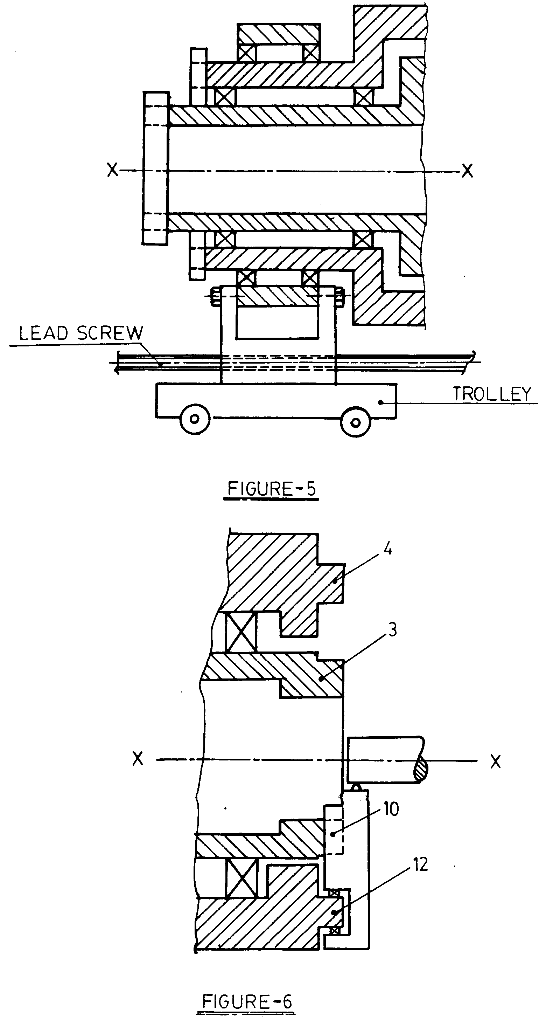

According to a further embodiment of this invention, the differential cam mechanism described above can be provided with an axial movement in any known manner (eg: the mobile trolly in fig. 5). This axial movement in combination with the radial movement of the cam follower of the differential cam mechanism can perform any machining operation that a lathe machine is capable of.

According to yet another embodiment of this invention (fig.6) the differential cam mechanism, described above can have either or both the flanges (3 & 4) projecting inward at the end of the pipes (1&2) and the cam (12) and slot (10) may be located at their faces.

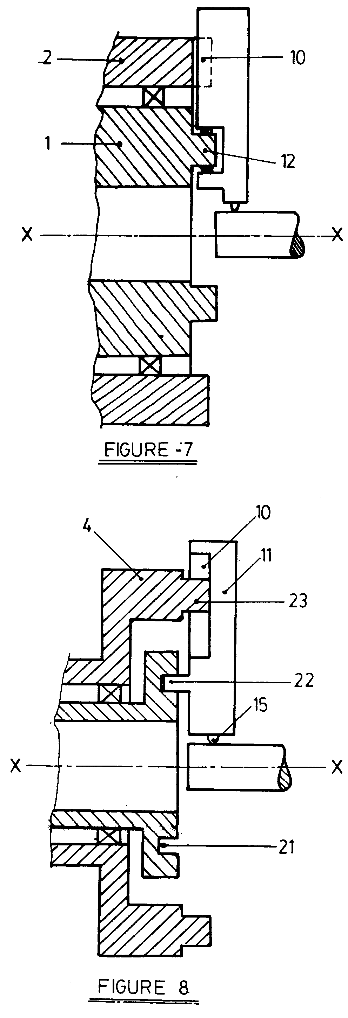

According to a further embodiment of this invention, (fig.7) the differential cam mechanism described above, the cam (12) and the slot (10) can be located at the faces of the pipes 1&2 themselves if the pipes are thick enough to accomodate the cam and slot. Thus the flanges 3 & 4 can be eliminated.

According to a further embodiment of this invention (fig.8) an involute/planar spiral groove can be provided as the cam (12) and a projecting pin (22) is fixed to the cam follower 11, which rides through the groove thereby imparting radial movement to the tool fixed at the free end of the cam follower.

According to a further embodiment of this invention (fig.8) the slot (10) can be provided in the cam follower (11) and a projection (23) slidably engaging the said slot (10) can be provided in the face of the outer flange (4) or in the face of the pipe (2).

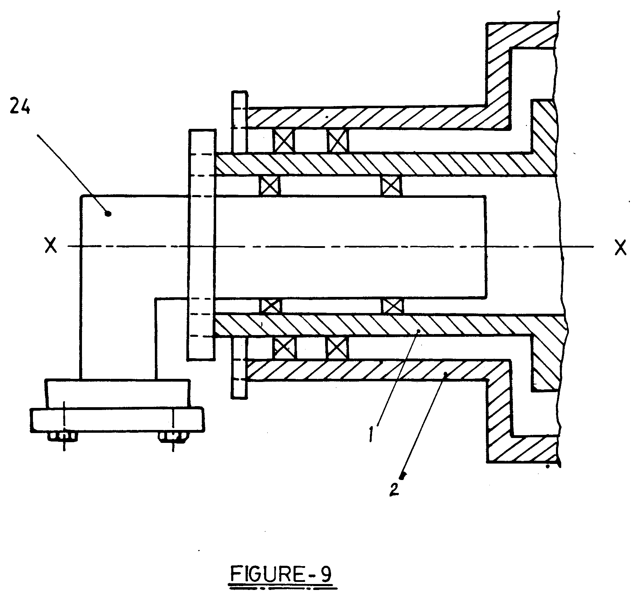

According to a further embodiment of this invention (fig. 9) the inner pipe (1) can be rotatably mounted over a static shaft (24) which is co-axial to pipes 1 & 2 and the static housing 7 can be eliminated.

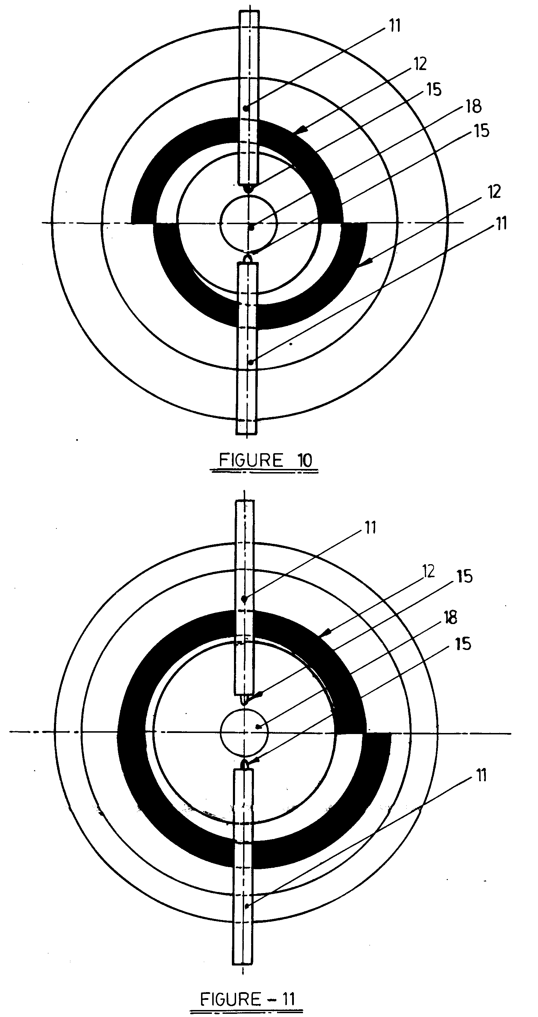

According to a further embodiment of this invention (fig. 10&11) more than one cam followers can be simultaneously used with a single cam or multiple cams.

According to a further embodiment of this invention (not shown) the pipes and the cam follower can be rotatably and slidably mounted without bearings by providing low friction contact.

While I have described and illustrated particular embodiments of my invention, I do not wish to limit myself to the exact forms shown, which are intented to illustrate the invention rather than to limit it. It is to be expressly understood that the invention is susceptible to such changes and modifications which may be made by any person well versed in the art to suit individual job requirements and any such modifications so made by such person shall define no material departure from the salient features of the invention herein described and illustrated in the accompanying drawings and should be considered as falling within the ambit and scope of this invention and the appended claims.

## Claims

1. A differential cam mechanism for control of revolving tools (fig. 1&2) comprising an outer pipe (2) rotatably mounted in a static housing (7), an inner pipe (1) rotatably and co-axially mounted inside the said outer pipe (2), an inner flange (3) provided at one end of the said inner pipe (1), an outer flange (4) provided at one end of the outer pipe (2), a slot (10) provided in the face of the said pipe flange (4) for slidably engaging therein one end of a cam follower/tool holder (11), a planar spiral/involute cam (12) having uniformly varying radius in a plane perpendicular to axis (X-X) of the said pipes provided at the face of the said pipe flange (3), the said cam follower/tool holder (11) freely and slidably engaging the said cam (12), a tool adapted to be fixed at the other end of the said cam follower/tool holder (11), the other free ends of the said outer and inner pipes being provided with drive means (16,17) for rotating the said pipes, independent of each other at desired variable speeds in both directions.

2. A differential cam mechanism for control of revolving tools as claimed in claim (1) wherein the said cam (12) is a planar spiral/involute projection from the face of the any one of the said flanges (3 or 4) and the cam follower (11) slides over the cam by any known means like a bracket (fig. 1).

3. A differential cam mechanism for control of revolving tools as claimed in claim (1) wherein the said cam (12) is a planar spiral involute groove cut into the face of any one of the said flanges (3 or 4) and the cam follower (11) slides in it by any known means like a projecting pin (22 fig. 8) and the slot 10 which slides over a pin (23 fig. 8) projecting from a flange is cut in the cam follower (11).

4. A differential cam mechanism for control of revolving tools as claimed in claims 1 to 3 wherein more than one cam follower are provided on a single cam or multiple cams to operate simultaneously (figs. 10 & 11).

5. A differential cam mechanism as claimed in claims 1 & 2 wherein the said slot (10) for slidably engaging the said one end of the cam follower (11) provided in the face of the said inner pipe flange (3) and the said cam (12) is provided at the face of the said outer pipe flange (4)...(fig.3).

6. A differential cam mechanism as claimed in any of the claim 1 to 5 wherein an axial projecting arm (20) is provided with the said cam follower (11) for mounting the said tool (15)...(fig.4).

7. A differential cam mechanism for control of revolving tools as claimed in claim 1 to 6 wherein any known means like a mobile trolly (fig. 5) imparts an axial movement to the mechanism.

8. A differential cam mechanism for control of revolving tools as claimed in claim 1 to 7 where in the inner pipe (1) is rotatably mounted on a shaft (24) which is co-axial to both inner pipe (1) and outer pipe (2) and the static housing (7) is eliminated (fig. 9).

9. A differential cam mechanism for control of revolving tools as claimed in claim (1) substantially as herein described and illustrated in the figures 1 to 11 of the accompanying drawings.

10. A machine/device comprising a differential cam mechanism for control of revolving tools as claimed in any of the claims 1 to 9.
